Europäisches Patentamt

European Patent Office

Office européen des brevets

(11) Numéro de publication: **0 270 445**
**A1**

## (12) DEMANDE DE BREVET EUROPEEN

(21) Numéro de dépôt: **87402624.8**

(22) Date de dépôt: **19.11.87**

(51) Int. Cl.⁴: **B 21 B 45/00**
**B 21 B 1/26**

(30) Priorité: **24.11.86 FR 8616330**

(43) Date de publication de la demande:
**08.06.88 Bulletin 88/23**

(84) Etats contractants désignés:
**AT BE DE ES GB GR IT LU NL SE**

(71) Demandeur: **USINOR ACIERS**
**La Défense 9 4 place de la Pyramide**
**F-92800 Puteaux (FR)**

(72) Inventeur: **Vautrain, Alain**
**42, Vallée de l'Yser**
**59470 Esquelbecq (FR)**

**Brysbaert, Jean-Marie**
**Looberghe**
**59630 Bourbourg (FR)**

(74) Mandataire: **Bouget, Lucien et al**
**Cabinet Lavoix 2, Place d'Estienne d'Orves**
**F-75441 Paris Cédex 09 (FR)**

(54) **Tunnel amovible de maintien en température d'un produit laminé à chaud dans un train de laminage continu.**

(57) Le tunnel comporte une ossature métallique rigide (3), un ensemble de recouvrement (5) en forme de U et un moyen de levage (12) pour le déplacement de l'ossature et de l'ensemble de recouvrement entre une position de service et une position hors service (3', 5'). L'ossature (3) comporte des traverses parallèles (10) et l'ensemble de recouvrement est constitué par une tôle métallique lisse recouverte par un matériau d'isolation. L'ensemble de recouvrement (5) est fixé sous l'ossature métallique (3) au niveau de chacune des traverses (10) par une pluralité de moyens de suspension (6) articulés.

FIG.4

EP 0 270 445 A1

## Description

Tunnel amovible de maintien en température d'un produit laminé à chaud dans un train de laminage continu

L'invention concerne un tunnel amovible de maintien en température d'un produit laminé à chaud dans un train de laminage continu.

Dans l'exploitation des trains à chaud et en particulier des trains à bandes continus, il peut être souhaitable de contrôler la température du produit en cours de laminage, en particulier entre deux opérations successives sur le produit séparées par un temps plus ou moins long au cours duquel le produit se déplace dans une zone d'attente. Dans la plupart des trains à bandes actuellement en service, les bandes de tôles sont amenées à se déplacer sur une table de transfert de grande longueur, après leur sortie des cages dégrossisseuses et avant leur entrée dans les cages finisseuses, elle-même précédée par un éboutage effectué grâce à une cisaille.

Dans le cas du laminage de certains produits sur ces trains à bandes et, en particulier, dans le cas du laminage des tôles magnétiques à grains orientés, il est nécessaire de contrôler soigneusement la température de la tôle avant son entrée dans les cages finisseuses.

On a donc proposé d'utiliser des tunnels de maintien en température recouvrant le produit pendant son passage sur la table de transfert. De tels tunnels permettent soit de maintenir la température de la bande de tôle sensiblement constante, soit d'élever la température de cette bande de tôle en utilisant des moyens de chauffage annexes, soit encore d'opérer à une température de laminage plus basse dans les cages dégrossisseuses tout en maintenant une température convenable du produit laminé, à l'entrée des cages finisseuses.

Dans tous les cas, il est nécessaire de prévoir un montage du tunnel au-dessus de la table de transfert ou de toute autre partie du laminoir où son utilisation serait nécessaire, tel que le tunnel puisse être escamoté, par exemple pour passer du laminage d'une gamme de produits à une autre gamme ne nécessitant pas l'utilisation d'un tunnel de maintien en température. Il est également nécessaire de prévoir un dispositif permettant d'escamoter très rapidement le tunnel, dans le cas où une tête de bande très déformée risque de heurter l'entrée du tunnel et d'entraîner un arrêt de la production et des avaries plus ou moins importantes sur l'installation.

On connaît des tunnels amovibles de maintien en température associés à des trains de laminage à chaud qui comportent une ossature métallique rigide sur laquelle est fixé un ensemble de recouvrement ou de capotage du produit laminé et un moyen de levage pour le déplacement de l'ossature et de l'ensemble de capotage entre une position de service où le capotage recouvre le produit sur une certaine longueur et une position hors service dans laquelle le capotage est éloigné du produit en cours de laminage.

L'ossature métallique rigide est généralement constituée d'une pluralité de traverses parallèles reliées entre elles qui viennent se placer dans la direction transversale du laminoir, dans la position de service du tunnel. L'ensemble de recouvrement ou de capotage présente une section transversale en forme de U venant coiffer le produit laminé dans la position de service. Ce dispositif de recouvrement peut être constitué par une simple tôle métallique en acier inoxydable ou en aluminium pliée en U, par des plaques ou autres éléments de matériau d'isolation assemblés entre eux ou encore par une structure complexe comportant une tôle métallique lisse pliée en U dirigée vers le produit et recouverte extérieurement par un matériau d'isolation thermique tel que la laine de roche.

Ces dispositifs, lorsqu'ils sont réalisés d'une manière simple et pour un coût acceptable, sont généralement peu efficace et présentent une durée de vie médiocre. Lorsqu'on veut augmenter leur efficacité et leur durée de vie, on parvient très souvent à des solutions extrêmement coûteuses et donc d'un intérêt industriel limité.

La température du dispositif de recouvrement connaît des variations très importantes qui entraînent des détériorations de ce dispositif, en particulier au niveau des points de jonction avec la structure métallique rigide. Dans le cas d'un ensemble de recouvrement comportant une tôle métallique doublée extérieurement par un matériau d'isolation thermique, on est ainsi amené, pour augmenter la résistance du dispositif, à utiliser une tôle métallique d'épaisseur relativement forte, ce qui entraîne une augmentation du poids et du coût du tunnel amovible.

Un tel tunnel est généralement d'une grande longueur et doit être réalisé en plusieurs tronçons comportant chacun une ossature métallique rigide portant l'ensemble de recouvrement du produit laminé et un moyen de levage placé latéralement par rapport au laminoir. Le tunnel constitue donc un ensemble encombrant et nécessitant un investissement important. Il importe donc de limiter au maximum les coûts relatifs à l'installation du tunnel et à son entretien et donc de rechercher des solutions permettant d'augmenter la durée de vie de la partie du tunnel susceptible de se détériorer en service, c'est-à-dire l'ensemble de recouvrement du produit laminé.

Le but de l'invention est donc de proposer un tunnel amovible de maintien en température d'un produit laminé à chaud dans un train de laminage continu comportant au moins un tronçon s'étendant dans la direction longitudinale du laminoir et constitué par une ossature métallique rigide formée d'une pluralité de traverses parallèles reliées entre elles portant un ensemble de recouvrement du produit laminé ayant une section transversale en forme de U et constitué par une tôle métallique lisse recouverte extérieurement par un matériau d'isolation thermique et un moyen de levage pour le déplacement de l'ossature et de l'ensemble de recouvrement entre une position de service dans laquelle l'ensemble de recouvrement est placé au-dessus du produit laminé en circulation qu'il recouvre sur une certaine longueur, les traverses de l'ossature étant alors placées dans la direction transversale du laminoir et une position hors service où l'ensemble de recouvrement est relevé et éloigné du produit laminé, ce tunnel amovible étant d'une grande efficacité et comportant un ensemble de recouvrement mobile d'un poids limité dont la durée de vie est considérablement accrue par rapport aux dispositifs connus de l'art antérieur.

Dans ce but, l'ensemble de recouvrement est fixé sous l'ossature métallique, au niveau de chacune des transverses, par une pluralité de moyens de suspension reliés de façon articulée à la traverse à leur partie supérieure et à l'ensemble de recouvrement à leur partie inférieure, de façon à permettre un libre déplacement de l'ensemble de recouvrement par rapport à l'ossature rigide, sous l'effet des dilatations et rétractions d'origine thermique.

Afin de bien faire comprendre l'invention, on va maintenant décrire, à titre d'exemple non limitatif, en se référant aux figures jointes en annexe, un tunnel amovible suivant l'invention.

La figure 1 est une vue schématique en élévation latérale et en coupe de deux tronçons du tunnel amovible.

La figure 2 est une vue de dessus suivant 2-2 de la figure 1.

La figure 3 est une vue à plus grande échelle, analogue à la figure 1, d'une partie d'un tronçon du tunnel.

La figure 4 est une vue en élévation et en coupe suivant 4-4 de la figure 2.

La figure 5 est une vue à plus grande échelle de l'ensemble de recouvrement et correspond à la partie de droite de la figure 4.

La figure 6 est une vue en élévation dans la direction longitudinale, d'un moyen de suspension de l'ensemble de recouvrement du tunnel.

La figure 7 est une vue en élévation, dans la direction transversale et suivant 7-7, du moyen de suspension représenté sur la figure 6.

La figure 8 et une vue en élévation analogue à la figure 4, montrant une première variante de réalisation du moyen de levage du tunnel.

La figure 9 est une vue en élévation analogue aux figures 4 et 8, montrant une seconde variante de réalisation du moyen de levage du tunnel.

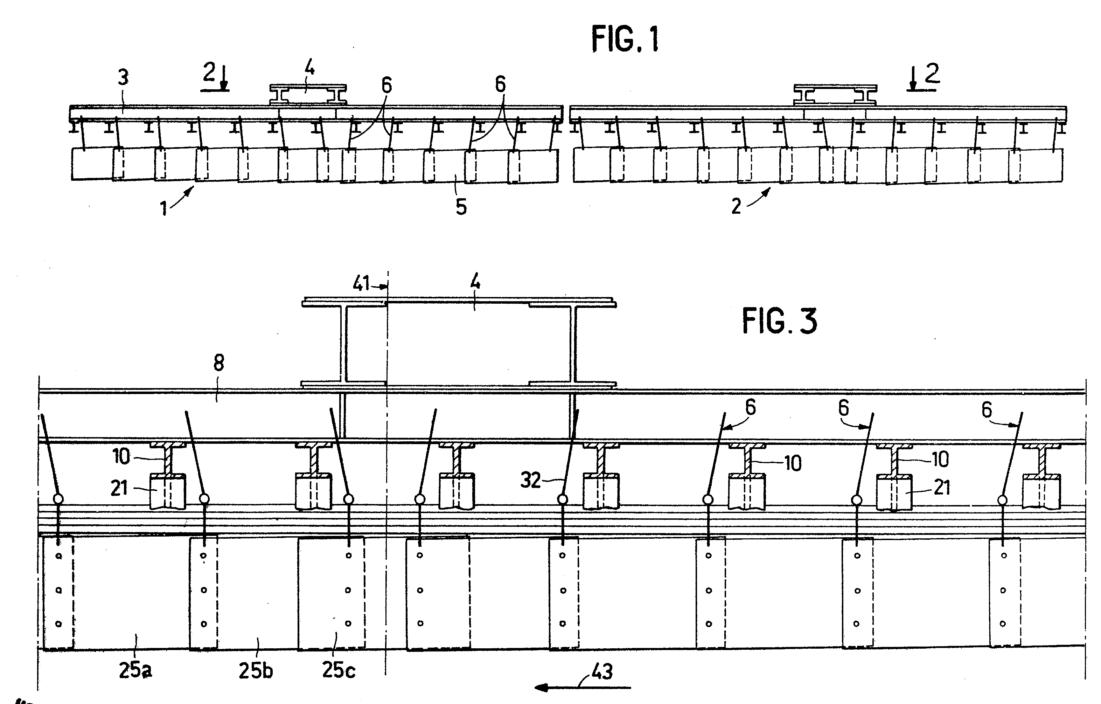

Sur la figure 1, on voit deux tronçons successifs 1 et 2 d'un tunnel de maintien en température disposés au-dessus de la table de transfert et d'attente d'un train à bande continu. La table d'attente comportant des rouleaux sur lesquels la bande se dé place est intercalée entre la sortie des cages dégrossisseuses et la cisaille d'éboutage située juste avant les cages finisseuses.

Chacun des tronçons 1 et 2 comporte une ossature métallique rigide 3 fixée à l'extrémité du bras 4 d'un moyen de levage, un ensemble de recouvrement 5 des tôles laminées en circulation sur la table d'attente et des moyens de suspension 6 et l'ensemble de recouvrement 5 sous l'ossature rigide 3.

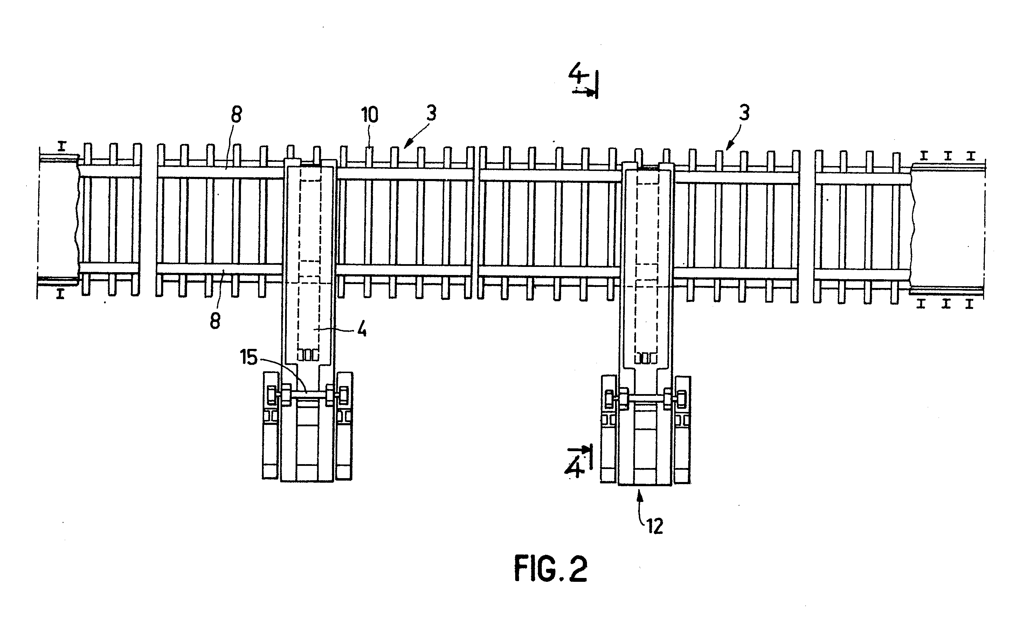

Comme il est visible sur la figure 2, l'ossature rigide comporte, pour chacun des tronçons, deux longerons 8 et un ensemble de traverses 10 parallèles entre elles fixées de façon rigide et à intervalles réguliers sous les longerons 8. Les longerons 8 et les traverses 10 sont constitués par des profilés à section en I. Le bras 4 est lui-même constitué par deux profilés à section en I parallèles et fixés de façon rigide sur la partie supérieure des longerons 8.

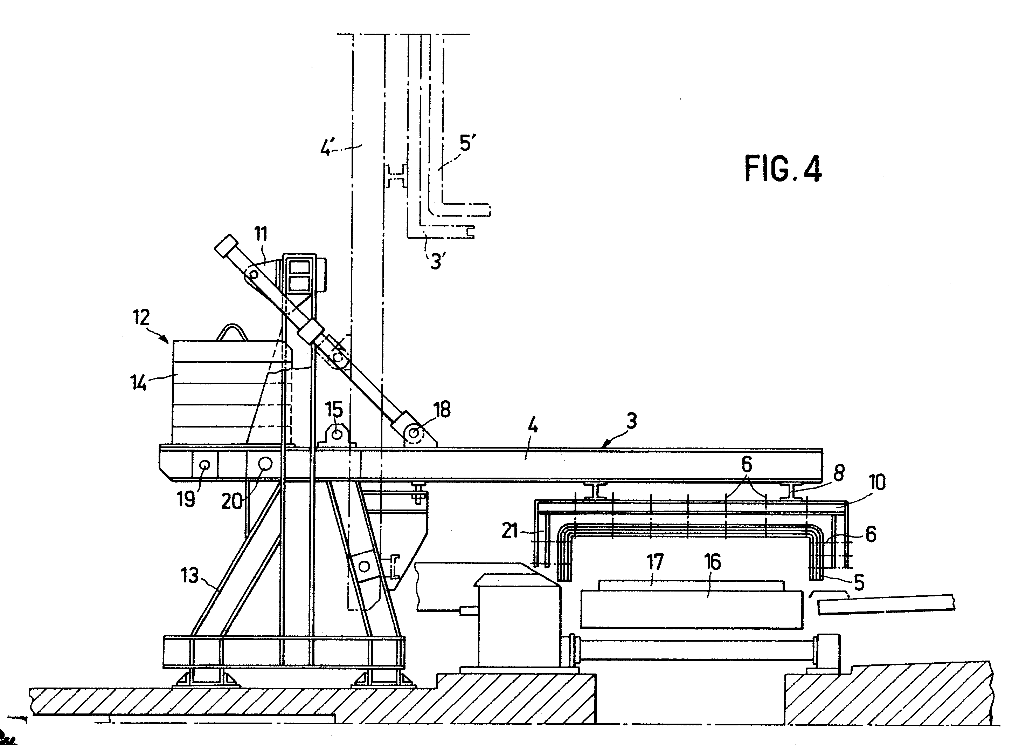

Sur les figures 2 et 4, on voit le moyen de levage 12 du tunnel comportant un chevalet 13 sur lequel est articulé le bras 4, un vérin hydraulique 11 et un contrepoids 14. Le chevalet 13 est fixé latéralement par rapport à la table d'attente du laminoir dont un rouleau 16 a été représenté sur la figure 4.

Le bras 4 du moyen de levage est articulé sur le chevalet 13 par l'intermédiaire d'un axe de rotation horizontal 15. Le corps du vérin 11 est fixé sur le chavalet 13 et sa tige est articulée à son extrémité sur les bras 4, autour d'un axe horizontal 18. Le vérin permet, lors de son actionnement, de déplacer le bras 4 entre une position horizontale correspondant à la position de service de l'ensemble de recouvrement 5 du tunnel et une position verticale 4' correspondant à la position hors service 5' de l'ensemble de recou vrement 5 du tunnel. Comme il est visible sur la figure 4, l'ensemble de recouvrement 5 vient se placer au-dessus de la tôle 17 en circulation sur les rouleaux 16 de la table d'attente, dans la position de service du tunnel. Le contrepoids 14 permet d'équilibrer le poids de l'ossature 3 et de l'ensemble de recouvrement 5 fixé à l'extrémité du bras 4. L'effort exercé par le vérin 11 pour le déplacement du bras 4 est donc limité à une valeur faible.

Le bras 4 comporte, dans sa partie d'extrémité opposée à la partie recevant l'ossature 3 et l'ensemble de recouvrement 5, c'est-à-dire dans sa partie sur laquelle est fixé le contrepoids 14, deux trous 19 et 20 destinés à recevoir des broches de blocage du bras dans sa position horizontale et dans sa position verticale respectivement, ces broches engagées dans les ouvertures 19 et 20 étant reçues dans des logements de blocage prévus sur le chevalet 13.

Comme il est visible sur les figures 3, 4 et 5, chacune des traverses 10 de l'ossature 3 comporte à ses extrémités des prolongements verticaux 21 et 22 de longueur inégale constitués chacun par deux plats métalliques parallèles soudés à l'extrémité de la traverse. L'ensemble des prolongements verticaux 21 et l'ensemble des prolongements verticaux 22 sont fixés, à leur extrémité inférieure, sur un profilé 23 (ou 24) constituant la partie inférieure de l'ossature 3.

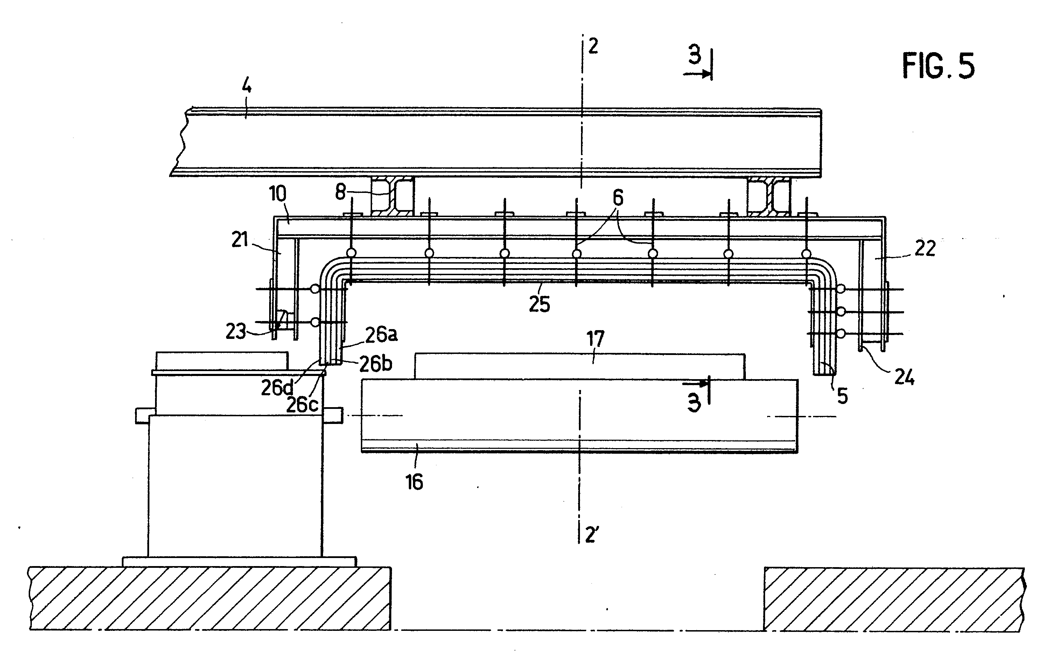

L'ensemble de recouvrement 5 du tunnel présente une section transversale en forme de U ouverte dans la direction opposée à l'ossature 3 sur laquelle est fixé cet ensemble de recouvrement. Cet ensemble 5 est constitué par une tôle en acier inoxydable 25 de 2 mm d'épaisseur pliée en U et recouverte extérieure ment, sur toute sa surface, par quatre couches superposées de laine de roche 26a, 26b, 26c et 26d. La tôle d'acier inoxydable lisse 25 constitue la surface interne de l'ensemble de recouvrement dirigée vers la tôle 17 en cours de laminage à chaud. Les quatre couches de laine de roche permettent d'isoler thermiquement l'espace ménagé au-dessus du produit laminé 17, par la tôle 25, lorsque le dispositif est dans sa position de service comme représenté sur la figure 5. Dans cette position de service, les traverses 10 de l'ossature 3 sont placées dans la direction transversale du laminoir, c'est-à-dire dans la direction des axes des rouleaux 16 de la table de transfert.

Comme il est visible sur la figure 3, la tôle 25 constituant la couche interne d'un tronçon de l'ensemble de recouvrement est formée par une succession de tronçons de tôle pliés en U 25a, 25b, 25c, ... reliés entre eux bout à bout par des ensembles vis-écrou dont l'écrou est soudé sur la tôle. Les tronçons successifs de la tôle 25 sont donc fixés rigidement les uns sur les autres et l'ensemble est équivalent à une tôle 25 unique pliée en U. Ce type de construction permet d'obtenir sans difficulté une tôle 25 profilée de grande longueur.

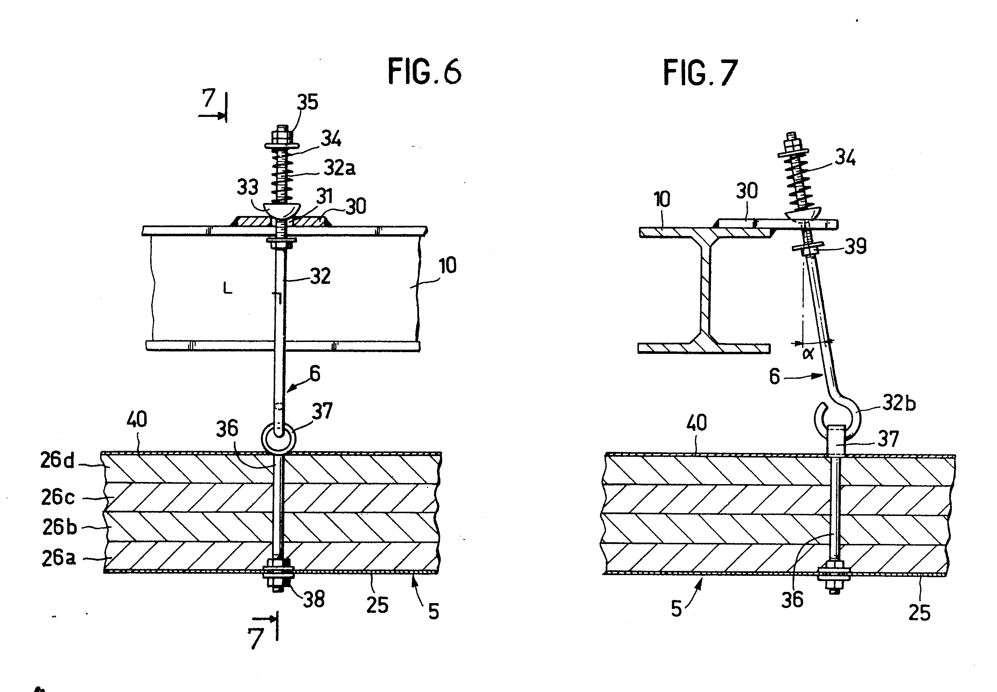

L'ensemble de recouvrement 5 est fixé sur l'ossature 3, au niveau de chacune des traverses 10, par un ensemble de compensateurs 6 qui seront décrits plus en détail en se référant aux figures 6 et 7.

Comme il est visible sur la figure 5, chacune des traverses 10 porte sept dispositifs de suspension 6 dont l'un est placé sensiblement dans le plan vertical médian du laminoir de trace ZZ' sur la figure 5 et les autres, symétriques deux à deux par rapport à ce plan. De plus, des moyens de suspension identiques sont placés entre les branches verticales de la section en U de l'ensemble de recouvrement 5 et les prolongements verticaux 21 et 22 de la traverse 10 respectivement.

On a représenté sur les figures 6 et 7, un moyen de suspension 6 permettant de relier l'ensemble de recouvrement 5 à une traverse 10 de l'ossature du tunnel.

La traverse 10 porte, au niveau de chacun des moyens de suspension 6, une plaquette de support 30 soudée sur la partie supérieure de la traverse 10 et montée en porte-à-faux de façon à comporter une partie saillante par rapport à la traverse 10, dans la direction longitudinale du laminoir. La plaquette 30 est percée d'une ouverture 31 dans sa partie saillante et le moyen de suspension 6 est constitué par une tige 32 traversant l'ouverture 31. La tige 32 est filetée dans sa partie supérieure 32a et comporte un crochet de fixation 32b à son extrémité inférieure. Une rotule 33 vient en appui dans l'ouverture 31, sur la face supérieure de la plaque 30, sous l'action d'un ressort de compression hélicoïdal 34. Le ressort 34 est mis en compression par un ensemble 35 constitué par un écrou de réglage, un écrou de blocage et une rondelle d'appui.

L'ensemble de recouvrement 5 du tunnel est suspendu au crochet 32b de la tige 32, par l'intermédiaire d'un tirant 36 terminé par un anneau 37. Le tirant 36 comporte une partie inférieure filetée engagée dans un trou traversant la tôle 25 de l'ensemble de recouvrement 5 qui est fixé à l'extrémité du tirant 36 grâce à des moyens de fixation 38 constitués par deux écrous placés de part et d'autre de la tôle 25 et engagés sur la partie filetée du tirant 36 et par une rondelle d'appui. L'ensemble de recouvrement 5 est donc suspendu à l'ossature 3 du tunnel grâce à un dispositif articulé permettant des déplacements relatifs de l'ensemble de recouvrement 5 constituant la partie chaude du tunnel par rapport à l'ossature 3 constituant la partie froide. En effet, lorsque l'ensemble de recouvrement est placé dans sa position de service, au-dessus du produit laminé chaud 17, comme représenté sur la figure 5, cet ensemble de recouvrement assurant le maintien en température du produit 17 est porté à une température de l'ordre de 1000° C. L'ossature 3 qui est protégée par les couches de matériau d'isolation thermique 26a, 26b, 26c et 26d est maintenue de son côté à une température voisine de l'ambiante.

L'ensemble de recouvrement 5 constitué par une tôle d'acier inoxydable relativement mince et par des couches de matière d'isolation thermique souple est susceptible de se déformer lorsqu'il est mis en suspension sous l'ossature 3. Une forme géométrique en U correcte est assurée grâce au réglage de tension des ressorts de compression 34 associés aux différents moyens de suspension 6. La latitude de réglage des ressorts 34 et des tiges 32 est limitée par une butée 39 constituée par une rondelle d'arrêt et un écrou engagé sur la partie filetée 32a de la tige 32.

Comme il est visible sur les figures 6 et 7, la couche externe de matériau d'isolation thermique 26d comporte sur sa face externe une feuille d'aluminium 40 assurant la protection de l'ensemble des couches d'isolation thermique fixées sur la tôle 25.

Comme il est visible sur les figures 3 et 7, le point de fixation du tirant 36 sur la tôle métallique 25 de l'ensemble de recouvrement 5 ne se trouve pas à l'aplomb de l'ouverture 31 de la plaquette 30 sur laquelle vient reposer la rotule 33 engagée sur la tige 32. Il en résulte une inclinaison d'angle par rapport à la verticale, du tirant 32, dans un plan vertical parallèle à l'axe du laminoir.

Sur la figure 3, on a représenté, pour le tronçon de tunnel correspondant, la trace 41 du plan de symétrie de ce tronçon, de direction transversale. Les moyens de suspension 6 sont placés, dans la direction longitudinale du laminoir, de façon symétrique par rapport à ce plan de trace 41. D'autre part, les tiges 32 des moyens de suspension 6 disposés d'un côté du plan médian de trace 41 sont toutes inclinées d'un même angle α, dans la direction de l'entrée du tronçon de tunnel, le produit laminé chaud se déplaçant dans le sens de la flèche 43, sur la table de transfert. Les tiges 32 des moyens de suspension 6 disposés de l'autre côté du plan médian, c'est-à-dire du côté de la sortie du tronçon de tunnel, sont inclinées d'un angle α vers la sortie du tronçon du tunnel.

L'inclinaison contrariée des tiges 32 des moyens de suspension 6 permet d'autocentrer les tronçons de l'ensemble de recouvrement 5, par rapport à l'ossature 3 du tunnel. D'autre part, dans chacun des tronçons, le flux thermique dû au produit chaud 17 et la dilatation linéaire résultante de la tôle 25 de l'ensemble de recouvrement se propage depuis le plan médian de trace 41 vers les extrémités du tunnel. L'inclinaison des tiges 32 et leur montage articulé à leurs deux extrémités permettent d'absorber au mieux les dilatations de la tôle de l'ensemble de recouvrement en ne faisant apparaître que de faibles contraintes, en particulier aux points d'ancrage.

Au démarrage d'une opération de maintien en température, lorsque la partie de recouvrement ou capotage du tunnel est mise en position de service et subit les premiers chocs thermiques venant de la présence du produit laminé chaud, la tôle d'acier inoxydable 25 s'affaisse entre les dispositifs de suspension 6 et forme un ensemble alvéolé dans lequel la laine de roche des couches 26a à 26d vient se disposer grâce à sa souplesse, ce qui réalise l'auto-blocage de cette laine de roche.

Dans le cas d'un tunnel de maintien en température d'une tôle laminée à chaud disposé au-dessus de la table de transfert entre la sortie des cages dégrossisseuses et la cisaille d'éboutage à l'entrée des cages finisseuses, on utilise un tunnel d'une longueur totale voisine de quarante mètres comportant six tronçons successifs associés chacun à un moyen de levage et d'escamotage. L'ensemble de recouvrement ou de capotage du produit est constitué par une tôle en acier réfractaire pliée en U et ne comportant aucun raidisseur. La surface interne du capotage est donc entièrement soumise au rayonnement direct de la bande de tôle laminée à chaud. La forme simple de la tôle d'acier réfractaire pliée en U permet également d'éviter les risques de vrillage sous l'effet de l'augmentation de la température.

Les couches d'isolation extérieures du capotage sont constituées par trois nappes de laine de roche d'épaisseur 25,4 mm superposées et par une nappe de laine de roche également d'épaisseur 25,4 mm mais revêtue extérieurement d'une feuille d'aluminium. Les nappes de laine de roche sont disposées en couches croisées et maintenues par des attaches boulonnées sur la tôle d'acier réfractaire. Les tirants 36 de suspension du capotage sont disposés de façon à passer entre les couches croisées de la laine de roche.

Le tunnel de maintien en température présentant les caractéristiques données ci-dessus a été utilisé sur un train de laminage de bandes à chaud, en particulier pour l'élaboration de tôles magnétiques à grains orientés. Au cours d'une utilisation de longue durée, ce tunnel n'a subi aucune détérioration et sa durée de vie semble d'ores et déjà bien supérieure à celle des dispositifs connus de l'art antérieur.

D'autre part, les performances de ce tunnel, sur le plan thermique, se sont avérées moins équivalentes à celles des dispositifs les plus perfectionnés de l'art antérieur.

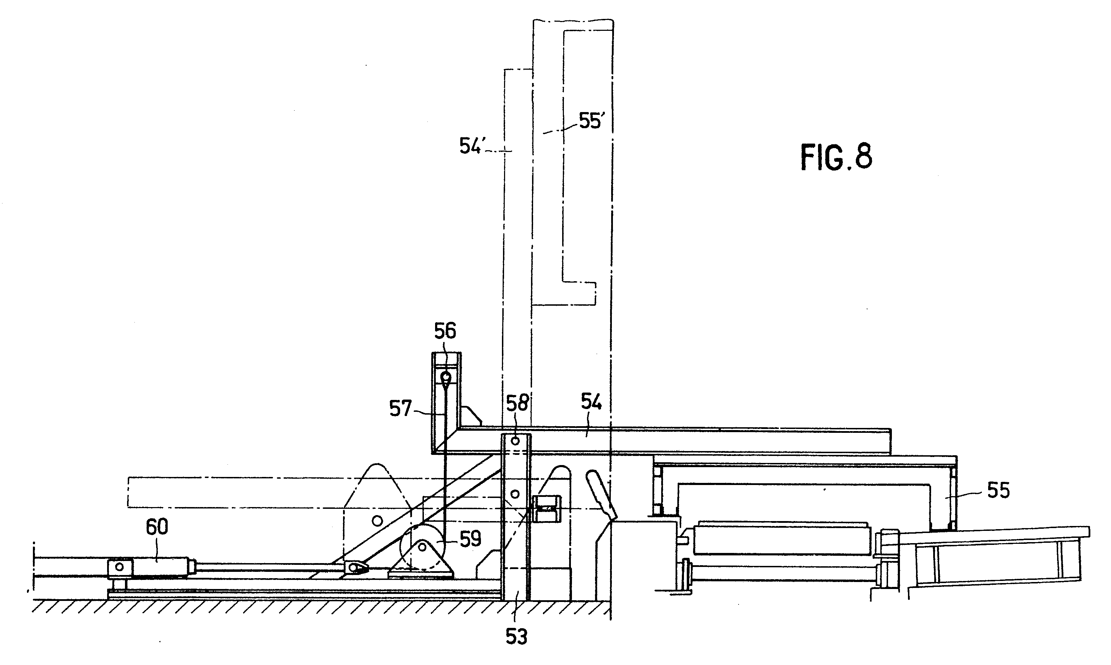

Sur la figure 8, on voit une variante de réalisation d'un moyen de levage associé à un tronçon d'un tunnel de maintien en température suivant l'invention. Le bras 54 de ce moyen de levage portant à l'une de ses extrémités l'ensemble 55 formé par l'ossature et le capotage du tronçon de tunnel a été représenté dans sa position de service horizontale et dans sa position verticale hors service. L'extrémité du bras 54 opposée à l'ensemble 55 est coudée à 90° et porte un tourillon 56 sur lequel est fixée l'extrémité d'un câble 57. Le bras 54 est articulé autour d'un axe horizontal 58, sur un dispositif de support fixe. Le câble 57 passe sur une poulie de déflection 59 permettant de renvoyer sa partie d'extrémité opposée au tourillon 56 du bras 54, dans la direction horizontale. Cette partie d'extrémité est reliée à la tige d'un vérin 60 disposé horizontalement sur le support fixe 53. L'actionnement du vérin 60 permet de déplacer le bras 54 entre sa position de service et sa position hors service 54'. La liaison par câble 57 permet une plus grande souplesse pour la transmission du mouvement au bras 54 et une disposition du vérin à l'horizontale, à la partie inférieure du support fixe 53.

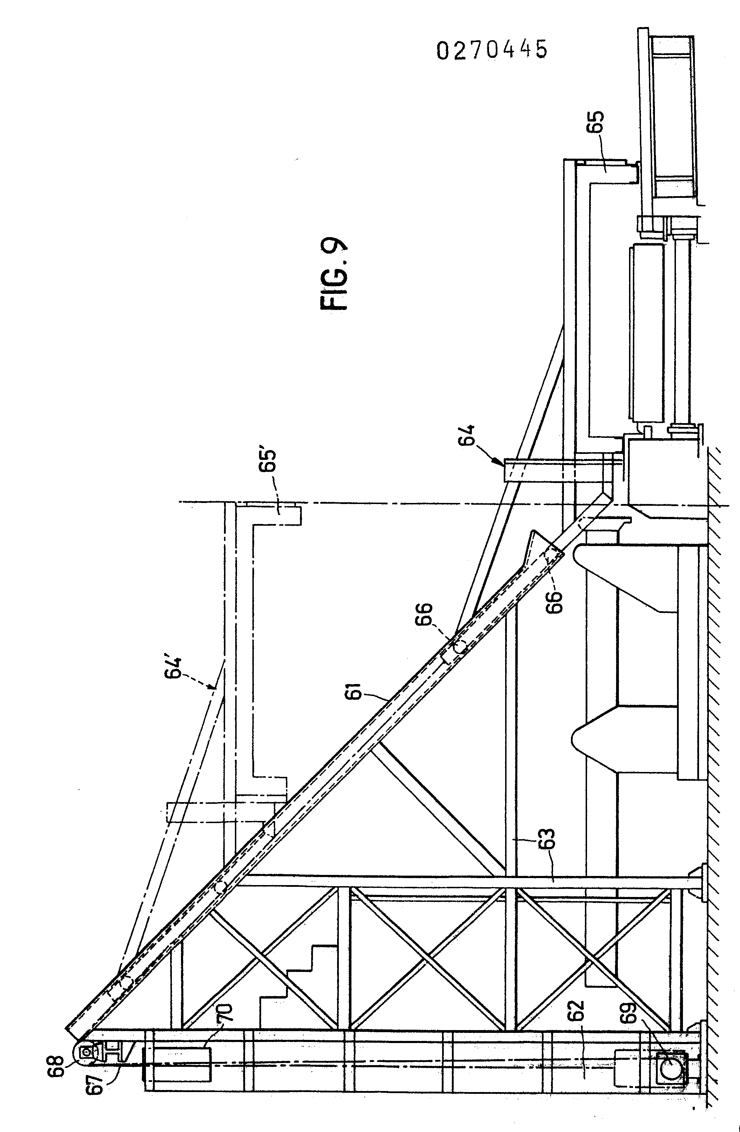

Sur la figure 9, on voit une autre variante de réalisation d'un dispositif de levage d'un tunnel suivant l'invention. Le dispositif comporte un support fixe 63 disposé dans une position latérale par rapport à la table de transfert du laminoir et portant deux rails inclinés parallèles 61. L'ensemble 65 comportant l'ossature et le capotage du tunnel est fixé sur un chariot 64 qui a été représenté dans sa position correspondant à la position en service de l'ensemble 65 et dans une position relevée 64' correspondant à une position hors service 65' de l'ensemble 65. Le chariot 64 est muni de quatre galets tels que 66 qui sont guidés pendant les déplacements du chariot par les rails 61. Le chariot 64 est fixé à un câble 67 passant sur une poulie de renvoi 68 à la partie supérieure du dispositif de levage. La partie d'extrémité du câble opposée à sa partie reliée au chariot 64 est enroulée sur un palan 69 permettant de déplacer le chariot entre sa position de service et la position relevée 64'. Un ensemble de contrepoids 70 permet d'équilibrer le poids du chariot 64 et de l'ensemble 65. Après son passage sur la poulie de renvoi 68, le câble 67 a un parcours pratiquement vertical à l'intérieur d'un puits ménagé dans le support fixe 63.

L'avantage du dispositif de levage représenté sur la figure 9 est sa grande sûreté d'utilisation et le fait que l'ensemble 65 ne subit aucune rotation pendant son déplacement et reste constamment orienté de la même façon que dans sa position de service. Les couches de fibre de roche qui recouvrent extérieurement le capotage ne subissent donc pas de contraintes sous l'effet de leur poids tenant à les déplacer et ont donc une meilleure tenue lors des manoeuvres du tunnel.

Dans tous les cas, le tunnel suivant l'invention présente l'avantage d'une meilleure durée de vie de son ensemble de recouvrement qui est monté de façon librement articulée sur l'ossature rigide reliée au moyen de levage.

L'invention ne se limite pas aux modes de réalisation qui ont été décrits.

C'est ainsi qu'on peut imaginer d'autres modes de réalisation des moyens de suspension qui constituent des compensateurs de dilatation pour l'élément de recouvrement du tunnel, ces moyens de suspension pouvant utiliser, pour leur liaison à l'ossature et à l'ensemble de recouvrement, toute forme d'articulation mécanique.

Il est également bien évident qu'on peut imaginer d'autres modes de réalisation des moyens de levage de l'ensemble de recouvrement du tunnel.

Enfin, le tunnel de maintien en température suivant l'invention peut être utilisé dans toute installation de laminage à chaud et en continu de produits dont il est nécessaire de contrôler la température au cours d'un transfert d'une longueur relativement importante.

## Revendications

1.- Tunnel amovible de maintien en température d'un produit laminé à chaud dans un train de laminage continu comportant au moins un tronçon (1, 2) s'étendant dans la direction longitudinale du laminoir et constitué par une ossature métallique rigide (3) formée d'une pluralité de traverses (10) parallèles reliées entre elles portant un ensemble de recouvrement (5) du produit laminé (17) ayant une section transversale en forme de U et constitué par une tôle métallique lisse (25) recouverte extérieurement par un matériau d'isolation thermique (26a, 26b, 26c, 26d) et un moyen de levage (12) pour le déplacement de l'ossature (3) et de l'ensemble de recouvrement (5) entre une position de service dans laquelle l'ensemble de recouvrement (5) est placé au-dessus du produit laminé en circulation qu'il recouvre sur une certaine longueur, les traverses (10) de l'ossature (3) étant placées dans la direction transversale du laminoir et une position hors service où l'ensemble de recouvrement (5) est relevé et éloigné du produit laminé (17) caractérisé par le fait que l'ensemble de recouvrement (5) est fixé sous l'ossature métallique (3) au niveau de chacune des traverses (10), par une pluralité de moyens de suspension (6) reliés de façon articulée à la traverse (10) à l'une de leurs extrémités et à l'ensemble de recouvrement (5) à leur autre extrémité, de façon à permettre un libre déplacement de l'ensemble de recouvrement (5) par rapport à l'ossature rigide (3), sous l'effet es dilatations et des rétractions d'origine thermique.

2.- Tunnel suivant la revendication 1, caractérisé par le fait que les moyens de suspension (6) comportent une tige (32) dont une extrémité repose par l'intermédiaire d'une rotule (33) dans une ouverture (31) de l'ossature (3) et dont l'autre extrémité constitue un crochet (32b) engagé dans un anneau de suspension (37) de l'ensemble de recouvrement (5).

3.- Tunnel suivant la revendication 2, caractérisé par le fait que la rotule (33) est en appui sur l'extrémité d'un ressort de compression (34) dont l'autre extrémité est mise en butée sur un dispositif de réglage de compression (35) relié à la tige (32).

4.- Tunnel suivant la revendication 3, caractérisé par le fait que le dispositif (35) de réglage de compression du ressort (34) est constitué par au moins un écrou et une rondelle d'appui.

5.- Tunnel suivant la revendication 2, caractérisé par le fait que l'anneau de suspension (37) de l'ensemble de recouvrement (5) est fixé à l'extrémité d'un tirant (36) dont l'autre extrémité est reliée de façon rigide à la tôle métallique lisse (25) de l'ensemble de recouvrement (5).

6.- Tunnel suivant l'une quelconque des revendications 2 à 5, caractérisé par le fait que les tiges (32) des moyens de suspension (6) reliés aux traverses (10) sont inclinées par rapport à la verticale, dans la position de service de l'ensemble de recouvrement.

7.- Tunnel suivant la revendication 6, caractérisé par le fait que pour chaque tronçon (1, 2) du tunnel, les tiges (32) des moyens de suspension (6) disposés d'un côté du plan médian transversal du tronçon sont inclinées d'un même angle par rapport à la verticale, dans un plan vertical parallèle à l'axe du laminoir et que les tiges (32) des moyens de suspension disposés de l'autre côté du plan médian du tronçon (1, 2) sont inclinées du même angle par rapport à la verticale et dans une direction opposée, dans un plan vertical parallèle à l'axe du laminoir.

8.- Tunnel amovible suivant l'une quelconque des revendications 1 à 7, caractérisé par le fait que le moyen de levage de l'ossature (3) et de l'ensemble de recouvrement (5) est constitué par un chevalet fixe (13), un bras (4) articulé sur le chevalet (13) autour d'un axe horizontal (15) et un vérin (11) dont le corps est fixé sur le chevalet (13) et la tige articulée autour d'un axe horizontal (18), sur le bras (4).

9.- Tunnel amovible suivant l'une quelconque des revendications 1 à 7, caractérisé par le fait que le moyen de levage de l'ossature (3) et de l'ensemble de recouvrement (5) comporte un support fixe (53), un bras (54) articulé autour d'un axe horizontal (58) sur le support (53) dont une extrémité porte l'ossature (3) de l'ensemble de recouvrement (5), un câble (57) fixé à l'une de ses extrémités, à l'extrémité du bras (54), opposée à l'ossature et à l'ensemble de recouvrement, une poulie de déflection (59) du câble (57) et un vérin (60) dont le corps est fixé sur le support (53) et la tige reliée à l'extrémité du câble (57) opposée à sont extrémité fixée sur le bras (54).

10.- Tunnel amovible suivant l'une quelconque des revendications 1 à 7, caractérisé par le fait que le moyen de levage de l'ossature (3) et de l'ensemble de recouvrement (5) est constitué par un plan incliné (61) solidaire d'un support fixe (63), par un chariot (64) muni de moyens (66) permettant son déplacement sur le plan incliné (61) et un ensemble à palan (69) et câble (67) permettant de déplacer le chariot (64) sur le plan incliné (61), entre une position correspondant à la position de service de l'ensemble de recouvrement (65) et une position hors service de cet ensemble de recouvrement (65), l'ensemble de recouvrement (65) étant déplacé uniquement par translation.

7

# FIG.1

# FIG.3

FIG.2

FIG. 4

FIG. 5

## FIG.6

7

35
34
32a
33  31  30
32
L
10
6
37
40
26d
26c
26b
26a
36
25
5
38
7

## FIG.7

34
10  30
39
6  α
32b
37
40
36
5  25

0270445

FIG.8

FIG.9

0270445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 010 976  (ENCOMECH)<br>* Figure 1; revendication 1 *<br>--- | 1,8 | B 21 B   45/00<br>B 21 B    1/26 |
| Y | GB-A-1 083 586  (JERU)<br>* Figure 3; page 2, lignes 95-100 *<br>--- | 1,8 | |
| A | GB-A-1 023 045  (KERAMATIK)<br>* Figures 1,2, réf. 2,4 *<br>--- | 1-7 | |
| A | DE-C- 246 922  (RIEMER)<br>* Figures 1,2 *<br>--- | 1-7 | |
| A | PATENT ABSTRACTS OF JAPAN, vol. 8, no. 85 (C-219)[1522], 18 avril 1984; & JP-A-59 6316 (NIPPON KOKAN K.K.) 13-01-1984<br>--- | 1-7 | |
| A | EP-A-0 049 000  (ENCOMECH)<br>* Revendications 1,3 *<br>--- | 1 | |
| A | BE-A-  893 565  (COCKERILL)<br>* Figures 3,4 *<br>----- | 1,8 | DOMAINES TECHNIQUES RECHERCHES (Int. Cl.4)<br><br>B 21 B<br>C 21 D |

Le présent rapport a été établi pour toutes les revendications

| Lieu de la recherche | Date d'achèvement de la recherche | Examinateur |
|---|---|---|
| LA HAYE | 12-02-1988 | VERMEESCH,P.J.C.C. |